# NEUE EUROPÄISCHE PATENTSCHRIFT

(11) **EP 1 672 235 B2**
(45) Veröffentlichungstag und Bekanntmachung des Hinweises auf die Entscheidung über den Einspruch: **29.05.2013**
(45) Hinweis auf die Patenterteilung: 17.10.2007
(21) Anmeldenummer: 04029658.4
(22) Anmeldetag: 15.12.2004
(51) Int. Cl.: F16D 13/64, F16D 25/0638, F16D 65/00

(54) **Lamelle für Kraftübertragungsaggregat sowie Kraftübertragungsaggregat mit Lamelle**
Lamella for power transmission assembly and power transmission assembly with lamella
Lamelle pour assemblage de transmission d' effort et assemblage de transmission avec lamelle

(43) Veröffentlichungstag der Anmeldung: 21.06.2006
(73) Patentinhaber: BorgWarner, Inc., Auburn Hills, MI 48326-2872 (US)
(72) Erfinder: Kearsey, Andrew, 86989 Steingaden (DE); Otremba, Markus, 68723 Schwetzingen (DE)
(74) Vertreter: Patentanwälte Westphal, Mussgnug & Partner

(56) Entgegenhaltungen:
- DE-A1- 1 575 983
- US-A- 2 850 118
- US-A- 3 896 684
- US-A- 3 897 860
- US-A- 4 736 828
- US-A- 5 080 211
- US-A- 5 975 267
- US-A1- 2002 007 997
- US-B1- 6 305 510

## Beschreibung

Die Erfindung betrifft eine Vollmaterial- oder Trägerlamelle für ein Kraftübertragungsaggregat gemäß dem Oberbegriff des Patentanspruchs 1. Weiterhin betrifft die Erfindung ein Kraftübertragungsaggregat, insbesondere eine Lamellenkupplung oder eine Reibbremse, gemäß dem Oberbegriff des Patentanspruchs 10.

Ein derartiges Kraftübertragungsaggregat in Form einer Lamellenkupplung ist beispielsweise aus der DE 199 57 511 A1 bekannt und umfasst eine Mehrzahl von Lamellen. Dabei ist bei der beschriebenen Lamellenkupplung eine erste Gruppe von Lamellen mit Außenverzahnung an einem Außenlamellenträger drehfest angeordnet und eine zweite Gruppe von Lamellen mit einer Innenverzahnung auf einem Innenlamellenträger drehfest angeordnet, welcher wiederum drehfest mit einer Nabe verbunden ist. Die Lamellen der beiden Gruppen greifen verzahnungsartig ineinander. Die beiden Gruppen von Lamellen sind in axialer Richtung relativ zueinander verschiebbar und dabei paarweise in reibschlüssige Verbindung bringbar. Zudem sind mit Schlitzen versehene Kupplungsscheiben für Viscokupplungen aus US 4,736,828 bekannt.

Bei den bekannten Lamellen für Kraftübertragungsaggregate wird unterschieden in Vollmateriallamellen, insbesondere aus Stahl, und Trägerlamellen, welche einseitig oder beidseitig mit einem Reibbelag versehen sind. Dabei sind die Lamellen derart angeordnet, dass eine Trägerlamelle mit beidseitigem Reibbelag mit zwei Vollmateriallamellen in Reibschluss bringbar ist, oder dass eine Trägerlamelle mit einseitigem Reibbelag mit der unbeschichteten Seite einer weiteren Trägerlamelle in Reibkontakt bringbar ist.

Die Lamellen dienen dazu, im geschlossenen Zustand ein Drehmoment zu übertragen. Die Drehmomente werden über die Verzahnung der Lamellen von dem Außen- oder Innenlamellenträger in die Lamellen eingeleitet und unter Kraftschluss des Kupplungspaketes auf den Innen- oder Außenlamellenträger übertragen. Bei der Einleitung und Übertragung der Drehmomente treten zwischen den Lamellen Torsionsbelastungen auf. Die unter Last auftretenden Torsionsbelastungen können beim Schließen der Kupplung zu unerwünschten Schwingungen führen.

Der Erfindung liegt daher die Aufgabe zu Grunde, eine Lamelle und ein Kupplungsaggregat vorzuschlagen, bei denen diese Schwingungen zumindest weitgehend unterbunden werden.

Diese Aufgabe wird durch eine Vollmaterial- oder Trägerlamelle gemäß dem Anspruch 1 sowie ein Kraftübertragungsaggregat gemäß dem Anspruch 10 gelöst.

Vorteilhafte Ausgestaltungen der Erfindung sind in den Unteransprüchen angegeben.

Dadurch, dass die Lamelle in Umfangsrichtung federnd ausgebildet ist, können Schwingungen im Kupplungssystem absorbiert werden. Hierdurch werden Geräusche eliminiert und ein sanftes Schaltgefühl vermittelt.

In Ausgestaltung der Erfindung ist vorgesehen, dass die Lamelle zusätzlich zu der Verzahnung mindestens eine Aussparung aufweist. Um Resonanzschwingungen zu vermeiden, ist vorgesehen, dass die Lamelle zusätzlich mit Dämpfungsmitteln zur Dämpfung einer federnden Bewegung in Umfangsrichtung ausgestattet ist. Dabei sind die Dämpfungsmittel derart ausgebildet, dass mindestens eine, vorzugsweise sämtliche, Aussparungen mit Dämpfungsmaterial gefüllt sind. Dabei ist für den besonderen Anwendungsfall der Lamellen in einem Kraftübertragungsaggregat in einem Kraftfahrzeug zu beachten, dass das Dämpfungsmaterial Temperaturen von etwa 450°C standhalten muss. Für weniger temperaturintensive Anwendungen könnte als Dämpfungsmaterial beispielsweise Silikon verwendet werden. Dabei ist die Aussparung mit Vorteil in axialer Richtung durchgängig ausgebildet und bildet so eine Art Durchbruch. Bei Trägerlamellen ist es nicht notwendig, dass die Aussparung sich auch axial in den Reibbelag fortsetzt, da der Reibbelag im Vergleich zum Trägerlamellenmaterial weich ist. Es ist von besonderem Vorteil, wenn sich die Aussparung zumindest teilweise in Umfangsrichtung erstreckt, so dass sich zwei radial beabstandete Teilbereiche der Lamelle in Umfangsrichtung gegeneinander federnd verschieben können. Hierbei hat sich insbesondere eine Ausführungsvariante als besonders vorteilhaft herausgestellt, bei der die Aussparungen in Umfangsrichtung gekrümmt und sich von radial innen nach radial außen verbreitend ausgebildet sind.

Durch das Vorsehen von Aussparungen wird zusätzlich erreicht, dass sich die Lamelle bei Erwärmung in Umfangsrichtung ausdehnen kann, wodurch eine Wellung der Lamelle vermieden wird.

Damit die Lamelle eine über den Umfang gleich verteilte Masse aufweist und damit ein ruhiger Lauf gewährleistet wird, ist mit Vorteil vorgesehen, dass mehrere, insbesondere gleichmäßig, über den Umfang der Lamelle verteilte Aussparungen vorgesehen sind.

In Weiterbildung der Erfindung ist mit Vorteil vorgesehen, dass die Aussparungen zur Innen- oder zur Außenseite der Lamelle hin offen ausgebildet sind. Die Form einer Aussparung entspricht also der eines seitlichen Einschnitts in die Lamelle. Dabei können Einschnitte vorgesehen sein, die sich vom Außenumfang der Lamelle in Richtung Innenumfang und/oder vom Innenumfang der Lamelle in Richtung Außenumfang erstrecken. Wenn im Bereich der Verzahnung der Lamelle Einschnitte vorgesehen sind, so ist es denkbar, diese an den Zahnköpfen als auch in den Zahnfüßen beginnen zu lassen.

Um eine besonders gute federnde Wirkung zu erzielen, ist mit Vorteil vorgesehen, dass die Einschnitte sich mindestens über ein Drittel, insbesondere mindestens über die Hälfte, der radialen Breite der Lamelle erstrecken. Die Federwirkung kann dadurch verbessert werden, dass in etwa gleich viele Einschnitte am Außenumfang wie am Innenumfang der Lamelle vorgesehen sind und dass die Einschnitte am Innenumfang und die Einschnitte am Außenumfang in Umfangsrichtung abwechselnd angeordnet sind. Es ist jedoch auch denkbar, das Verhältnis der Anzahl der Einschnitte am Außenumfang zu der Anzahl der Einschnitte am Innenumfang im Bereich 1:10 bis 10:1 zu variieren.

Gemäß einer besonderen Ausgestaltung der Erfindung ist die Aussparung als mindestens eine, insbesondere umlaufende, ringförmige Aussparung ausgebildet, die mit radialem Abstand vom Außenumfang und mit radialem Abstand zum Innenumfang angeordnet ist. In einer besonderen Ausgestaltung entkoppelt die so ausgebildete Aussparung den Verzahnungsbereich der Lamelle und den radial davon beabstandeten, insbesondere mit Reibbelag ausgestatteten, Bereich der Lamelle. Die beiden ringförmigen Bereiche können mittels über den Umfang verteilten, radial verlaufenden Brücken, insbesondere aus Metall, miteinander verbunden sein.

Gemäß einer besonders vorteilhaften Ausgestaltung des erfindungsgemäßen Kraftübertragungsaggregates ist vorgesehen, dass mindestens eine, vorzugsweise sämtliche, Lamellen in die die Krafteinleitung erfolgt, in Umfangsrichtung federnd ausgebildet sind. Hierdurch wird erreicht, dass die Schwingung bereits im Vorfeld eliminiert werden kann, bevor sie auf weitere Lamellen übertragen wird. Dabei können die die Kraft ausleitende Lamellen bei Bedarf nicht-federnd ausgebildet sein.

Die Erfindung wird im Folgenden anhand der Zeichnung, die mehrere Ausführungsbeispiele der Erfindung darstellt, näher erläutert.

Darin ist im Einzelnen Folgendes dargestellt:
- Figur 1: zeigt in einem achsparallelen Schnitt eine Mehrscheiben-Lamellenkupplung in schematischer Darstellung,
- Figur 2: ein erstes Ausführungsbeispiel eines Ausschnitts einer Lamelle, welches nicht Bestandteil der Erfindung ist,
- Figur 3a: ein zweites Ausführungsbeispiel eines Ausschnitts einer innenverzahnten Lamelle,
- Figur 3b: ein drittes Ausführungsbeispiel eines Ausschnitts einer außenverzahnten Lamelle,
- Figur 4: ein viertes Ausführungsbeispiel eines Ausschnitts einer Lamelle, welches nicht Bestandteil der Erfindung ist,
- Figur 5: ein fünftes Ausführungsbeispiel eines Ausschnitts einer Lamelle.

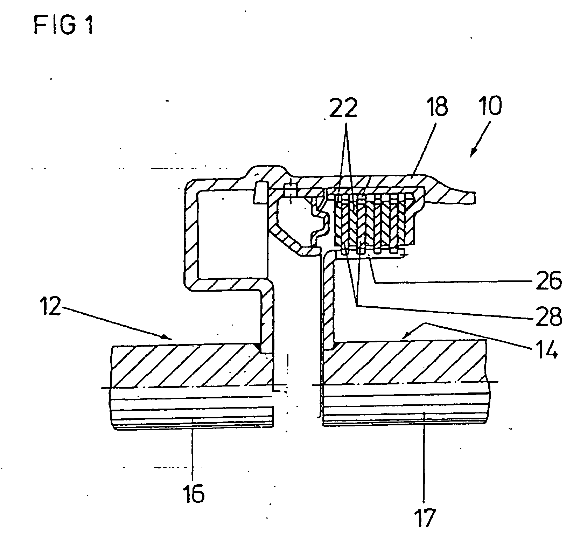

Die in Figur 1 gezeigte Lamellenkupplung 10 weist einen angetriebenen Bereich 12 und einen abtreibenden Bereich 14 auf. Der angetriebene Bereich 12 beinhaltet eine Antriebswelle 16, die mit einem Außenlamellenträger 18 drehfest verbunden ist. Im Außenlamellenträger 18 sind Außenlamellen 22 mit Ihrer Außenverzahnung drehfest und axial verschieblich gelagert.

Der Abtriebsbereich 14 weist eine Abtriebswelle 17 auf, die drehfest mit einem Innenlamellenträger 26 verbunden ist. Mit dem Innenlamellenträger 26 sind drehfest, jedoch in axialer Richtung verschieblich, Innenlamellen 28 mittels einer Innenverzahnung verbunden.

Die Außenlamellen 22 und die Innenlamellen 28 greifen verzahnungsartig ineinander, so dass bei geschlossener Kupplung ein Drehmoment von der Antriebswelle 16 über den Außenlamellenträger 18, die Außenlamellen 22, die Innenlamellen 23, den Innenlamellenträger 26 auf die Abtriebswelle 17 übertragen werden kann.

In dem gezeigten Ausführungsbeispiel sind die Außenlamellen 22 als Stahllamellen und die Innenlamellen 28 als Trägerlamellen mit beidseitigem Reibbelag 32 ausgebildet, so dass immer ein Reibbelag 32 mit einer Stahllamelle in Reibschluss bringbar ist. Insofern handelt es sich um eine einfache Lamellenkupplung. Die Erfindung ist jedoch nicht nur auf einfache Lamellenkupplung beschränkt, sondern bezieht sich auf sämtliche Arten von Lamellenkupplungen, insbesondere auch auf Doppelkupplungen.

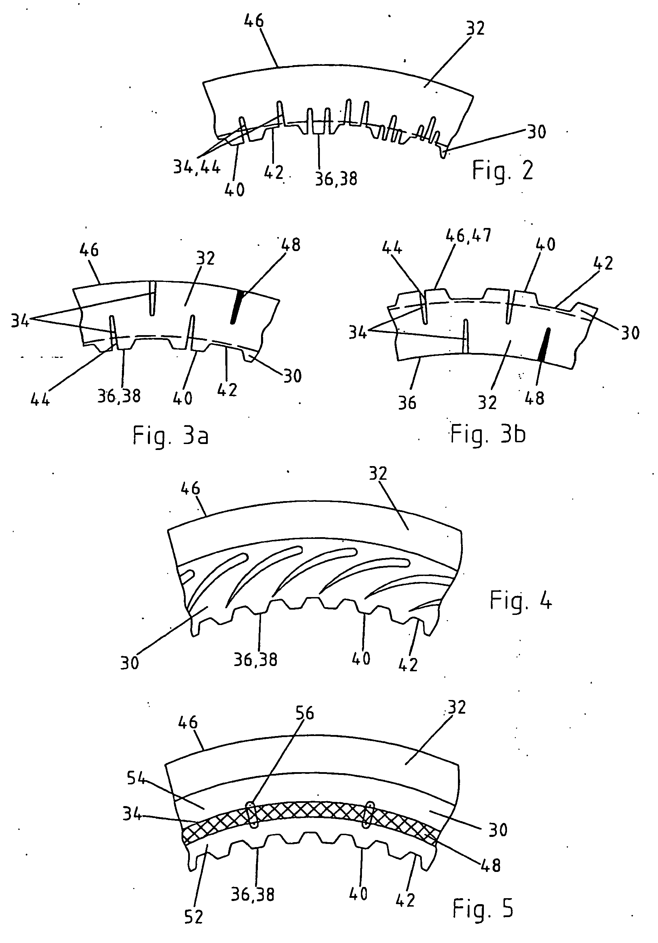

Im Folgenden wird die Erfindung anhand der Figuren 3 und 5 am Beispiel von Trägerlamellen 30 beschrieben, wobei die radial untere Grenze des ringförmigen Reibbelags 32 in den Figuren 2 und 3a mit einer gestrichelten Linie angedeutet und in den Figuren 4 bis 5 mittels einer Volllinie dargestellt ist. In Figur 3b ist die radial obere Grenze des ringförmigen Reibbelags 32 mit einer gestrichelten Linie dargestellt. Der Reibbelag erstreckt sich radial bis zum Außenumfang der Lamelle. In allen dargestellten Ausführungsbeispielen sind in den Trägerlamellen Aussparungen 34 vorgesehen. Die Reibbeläge weisen keine Aussparungen auf. Dies soll jedoch in keiner Weise beschränkend verstanden werden. Selbstverständlich ist es auch möglich, die Aussparungen axial in die Reibbeläge hinein vorzusetzen, wobei dies jedoch in der Regel nicht sinnvoll sein wird.

Sämtliche in den Figuren 2 bis 5 dargestellten Trägerlamellen 30 weisen am Innenumfang 36 eine Innenverzahnung 38 mit in Umfangsrichtung abwechselnden Zahnköpfen 40 und Zahnfüßen 42 auf. Mit dieser Verzahnung 38 greifen die Trägerlamellen 30 in axial verlaufende Nuten am Innenlamellenträger 26 ein und sind somit drehfest, jedoch axial verschieblich mit diesem verbunden.

Die Aussparungen 34 der in Figur 2 dargestellten Trägerlamelle 30 sind als Einschnitte 44 ausgebildet, die sich vom Innenumfang 36 der ringförmigen Trägerlamelle 30 in Richtung Außenumfang 46 erstrecken. Die Einschnitte 44 sind in Richtung Innenumfang offen. In Figur 1 erstrecken sich die Einschnitte 44 teilweise ungefähr über die Hälfte der radialen Breite der ringförmigen Trägerlamelle 30. Beispielhaft sind in Figur 2 mehrere Möglichkeiten dargestellt, wie die Einschnitte 44 ausgebildet sein können. Ein Teil der Einschnitte 44 erstreckt sich von den Zahnfüßen 42 in Richtung Außenumfang 46, wohingegen sich ein anderer Teil der Einschnitte 44 von den Zahnköpfen 40 in Richtung Außenumfang 46 erstreckt. In dem gezeigten Ausführungsbeispiel weisen die Einschnitte 44 einen geraden, radialen Verlauf auf. Sie können jedoch auch gekrümmt oder abgewinkelt ausgebildet sein.

Bei den in den Figuren 3a und 3b dargestellten Ausschnitten einer innen- bzw. außenverzahnten Trägerlamelle 30 erstreckt sich die Hälfte der Einschnitte 44 vom Innenumfang 36 in Richtung Außenumfang 46 und die andere Hälfte der Einschnitte 44 vom Außenumfang 46 in Richtung Innenumfang 36. Dabei wechseln sich die unterschiedlichen Einschnitte 44 in Umfangsrichtung ab. Die am Innenumfang 36 angeordneten Einschnitte sind in den in den Figuren 3a und 3b dargestellten Ausführungsbeispielen mit ihrem radial offenen Ende in den Zahnköpfen 40 angeordnet. Sämtliche Aussparungen 34 sind in axialer Richtung durchgängig ausgebildet. Der rechte, obere Einschnitt in Figur 3a und der rechte, untere Einschnitt in Figur 3b ist mit Dämpfungsmaterial 48 gefüllt. Dieses Dämpfungsmaterial ist temperaturbeständig und hält Temperaturen von mindestens 180°C stand. Um eine verbesserte Dämpfung zu gewährleisten, können selbstverständlich mehrere oder alle Aussparungen 34 entweder teilweise oder vollständig mit Dämpfungsmaterial 28 gefüllt sein.

Bei dem in Figur 4 dargestellten Ausschnitt einer Trägerlamelle 30 sind die Aussparungen 34 als Durchbrüche 50 ausgebildet, also weder zum Innenumfang 36, noch zum Außenumfang 46 hin offen ausgebildet. Die Durchbrüche 50 sind in Umfangsrichtung gekrümmt und verbreitern sich von radial innen nach radial außen.

Bei dem in Figur 5 dargestellten Ausschnitt einer Trägerlamelle 30 ist die Aussparung 34 als umlaufender, ringförmiger Durchbruch ausgebildet, welcher vollständig mit Dämpfungsmaterial 48 gefüllt ist. Der Verzahnungsbereich 52 der Trägerlamelle 30 ist in radialer Richtung mit dem äußeren Bereich 54 der Trägerlamelle 30 gleichmäßig über den Umfang verteilte Brücken 56 miteinander verbunden, wobei die Brücken 56 zumindest eine minimale Relativverschiebung der Bereiche 52 und 54 in Umfangsrichtung zulassen. Anders ausgedrückt, besteht die Lamelle aus zwei koaxial ausgerichteten Ringen, nämlich einem Verzahnungsring und einem radial außen angeordneten äußeren Bereich mit Reibbelag, wobei die beiden Ringe über radiale Brücken miteinander verbunden sind.

### Bezugszeichenliste

- 10: Lamellenkupplung
- 12: Antriebsbereich
- 14: Abtriebsbereich
- 16: Antriebswelle
- 17: Abtriebswelle
- 18: Außenlamellenträger
- 22: Außenlamellen (Stahllamellen) mit Außenverzahnung
- 26: Innenlamellenträger
- 28: Innenlamellen (Trägerlamellen mit beidseitigem Reibbelag) mit Innenverzahnung
- 30: Trägerlamellen
- 32: Reibbelag
- 34: Aussparung
- 36: Innenumfang
- 38: Innenverzahnung
- 40: Zahnkopf
- 42: Zahnfuß
- 44: Einschnitte
- 46: Außenumfang
- 47: Außenverzahnung
- 48: Dämpfungsmaterial
- 50: Durchbrüche
- 52: Verzahnungsbereich
- 54: radial äußerer Bereich
- 56: Brücken

## Patentansprüche

1. Ringförmige Vollmaterial- oder Trägerlamelle (22,28,30) für ein Kraftübertragungsaggregat (10), insbesondere für eine Lamellenkupplung (10) oder eine Reibbremse, mit einer Innen- (38) und/oder Außenverzahnung (47) zur Kraftein- oder Ausleitung,
**dadurch gekennzeichnet, dass** die Lamelle (22, 28, 30) in Umfangsrichtung federnd ausgebildet ist, dass die Lamelle (22, 28, 30) zusätzlich zu der Verzahnung (38) mindestens eine Aussparung aufweist, dass die Lamelle (22, 28, 30) Dämpfungsmittel (48) zur Dämpfung einer federnden Bewegung in Umfangsrichtung aufweist, und dass mindestens eine Aussparung (34) zumindest teilweise mit Dämpfungsmaterial (48) gefüllt ist.

2. Lamelle nach Anspruch 1,
**dadurch gekennzeichnet, dass** die Aussparung (34) in axialer Richtung durchgängig ist.

3. Lamelle nach einem der Ansprüche 1 oder 2,
**dadurch gekennzeichnet, dass** mehrere, insbesondere gleichmäßig, über den Umfang der Lamelle verteilte Aussparungen (34) vorgesehen sind.

4. Lamelle nach Anspruch 3,
**dadurch gekennzeichnet, dass** die Aussparungen (34) in Umfangsrichtung gekrümmt und sich von radial innen nach radial außen und/oder sich von radial außen nach radial innen verbreiternd ausgebildet sind.

5. Lamelle nach einem der Ansprüche 1 bis 4,
**dadurch gekennzeichnet, dass** die Aussparungen (34) zumindest teilweise als Einschnitte (44) ausgebildet sind, die sich vom Außenumfang (46) und/oder vom Innenumfang (36) der Lamelle (22, 28, 30) in Richtung Innenumfang (36) bzw. Außenumfang (46) erstrecken.

6. Lamelle nach Anspruch 5,
**dadurch gekennzeichnet, dass** die Einschnitte (44) sich mindestens über ein Drittel der radialen Breite der Lamelle (22, 28, 30) erstrecken.

7. Lamelle nach einem der Ansprüche 5 oder 6,
**dadurch gekennzeichnet, dass** in etwa gleich viele vom Außenumfang (46) in Richtung Innenumfang (36) der Lamelle (22, 28, 30) verlaufende Einschnitte (44) wie vom Innenumfang (36) in Richtung Außenumfang (46) verlaufende Einschnitte (44) vorgesehen sind.

8. Lamelle nach einem der Ansprüche 5 bis 7,
**dadurch gekennzeichnet, dass** vom Außenumfang (46) in Richtung Innenumfang (36) der Lamelle (22, 28, 30) verlaufende Einschnitte (44) und vom Innenumfang (36) in Richtung Außenumfang (46) verlaufende Einschnitte (44) in Umfangsrichtung abwechselnd angeordnet sind.

9. Lamelle nach einem der Ansprüche 1 bis 3,
**dadurch gekennzeichnet, dass** die Aussparung (34) als mindestens eine, insbesondere umlaufende, ringförmige Aussparung (34) ausgebildet ist, die mit radialem Abstand vom Außenumfang, (46) und mit radialen Abstand zum Innenumfang (36) angeordnet ist.

10. Kraftübertragungsaggregat (10), insbesondere eine Lamellenkupplung (10) oder eine Reibbremse,
**dadurch gekennzeichnet, dass** das Kraftübertragungsaggregat (10) mindestens eine Lamelle (22, 28, 30) nach einem der vorhergehenden Ansprüche aufweist.

11. Kraftübertragungsaggregat nach Anspruch 10,
**dadurch gekennzeichnet, dass** mindestens eine, vorzugsweise sämtliche Lamellen (22, 28, 30), in die die Krafteinleitung erfolgt, gemäß einem der Ansprüche 1 bis 9 ausgebildet ist.

## Claims

1. Annular solid-material disc or carrier disc (22, 28, 30) for a power transmission assembly (10), in particular for a multiple disc clutch (10) or a friction brake, having an internal toothing system (38) and/or outer toothing system (47) for the input or output of power, **characterized in that** the disc (22, 28, 30) is of resilient configuration in the circumferential direction, that the disc (22, 28, 30) has at least one cut-out in addition to the toothing system (38), that the disc (22, 28, 30) has damping means (48) for damping a resilient movement in the circumferential direction and that at least one cut-out (34) is filled at least partially with damping material (48).

2. Disc according to Claim 1, **characterized in that** the cut-out (34) is continuous in the axial direction.

3. Disc according to either of Claims 1 and 2, **characterized in that** a plurality of cut-outs (34) are provided which are distributed over the circumference of the disc, in particular uniformly.

4. Disc according to Claim 3, **characterized in that** the cut-outs (34) are configured so as to be curved in the circumferential direction and to widen from the radial inside to the radial outside and/or from the radial outside to the radial inside.

5. Disc according to one of Claims 1 to 4, **characterized in that** the cut-outs (34) are configured at least partially as indents (44) which extend from the outer circumference (46) and/or from the inner circumference (36) of the disc (22, 28, 30) in the direction of the inner circumference (36) or the outer circumference (46).

6. Disc according to Claim 5, **characterized in that** the indents (44) extend at least over a third of the radial width of the disc (22, 28, 30).

7. Disc according to either of Claims 5 and 6, **characterized in that** approximately as many indents (44) which extend from the outer circumference (46) in the direction of the inner circumference (36) of the disc (22, 28, 30) are provided as indents (44) which extend from the inner circumference (36) in the direction of the outer circumference (46).

8. Disc according to one of Claims 5 to 7, **characterized in that** indents (44) which extend from the outer circumference (46) in the direction of the inner circumference (36) of the disc (22, 28, 30) and indents (44) which extend from the inner circumference (36) in the direction of the outer circumference (46) are arranged alternately in the circumferential direction.

9. Disc according to one of Claims 1 to 3, **characterized in that** the cut-out (34) is configured as at least one, in particular circumferential, annular cut-out (34) which is arranged at a radial spacing from the outer circumference (46) and at a radial spacing from the inner circumference (36).

10. Power transmission assembly (10), in particular a multiple disc clutch (10) or a friction brake, **characterized in that** the power transmission assembly (10) has at least one disc (22, 28, 30) according to one of the preceding claims.

11. Power transmission assembly according to Claim 10, **characterized in that** at least one, preferably all of the discs (22, 28, 30), into which the power is input, is/are configured according to one of Claims 1 to 9.

## Revendications

1. Lamelle annulaire de support ou en matériau massif (22, 28, 30) pour un assemblage de transmission d'effort (10), notamment pour un embrayage à lamelles (10) ou un frein à friction, comprenant une denture interne (38) et/ou une denture externe (47) pour l'introduction ou l'évacuation de forces,
**caractérisée en ce que** la lamelle (22, 28, 30) est réalisée de manière élastique dans la direction périphérique, que la lamelle (22, 28, 30) présente en plus de la denture (38) au moins un évidemment, que la lamelle (22, 28, 30) présente des moyens d'amortissement (48) pour amortir un mouvement élastique dans la direction périphérique et qu'au moins un évidement (34) est rempli au moins en partie de matériau d'amortissement (48).

2. Lamelle selon la revendication 1,
**caractérisée en ce que**
l'évidement (34) est traversant dans la direction axiale.

3. Lamelle selon l'une quelconque des revendications 1 ou 2,
**caractérisée en ce que**
l'on prévoit plusieurs évidements (34), notamment répartis uniformément sur la périphérie de la lamelle.

4. Lamelle selon la revendication 3,
**caractérisée en ce que**
les évidements (34) sont courbés dans la direction périphérique et s'étendent en s'élargissant radialement de l'intérieur vers l'extérieur et/ou radialement de l'extérieur vers l'intérieur.

5. Lamelle selon l'une quelconque des revendications 1 à 4,
**caractérisée en ce que**
les évidements (34) sont réalisés au moins en partie sous forme d'entailles (44) qui s'étendent depuis la périphérie externe (46) et/ou depuis la périphérie interne (36) de la lamelle (22, 28, 30) dans la direction de la périphérie interne (36), respectivement externe (46).

6. Lamelle selon la revendication 5,
**caractérisée en ce que**
les entailles (44) s'étendent au moins sur un tiers de la largeur radiale de la lamelle (22, 28, 30).

7. Lamelle selon l'une quelconque des revendications 5 ou 6,
**caractérisée en ce que**
l'on prévoit approximativement autant d'entailles (44) s'étendant de la périphérie externe (46) dans la direction de la périphérie interne (36) de la lamelle (22, 28, 30) que d'entailles (44) s'étendant de la périphérie interne (36) dans la direction de la périphérie externe (46).

8. Lamelle selon l'une quelconque des revendications 5 à 7,
**caractérisée en ce que**
des entailles (44) s'étendant de la périphérie externe (46) dans la direction de la périphérie interne (36) de la lamelle (22, 28, 30) et des entailles (44) s'étendant de la périphérie interne (36) dans la direction de la périphérie externe (46) sont disposées en alternance dans la direction périphérique.

9. Lamelle selon l'une quelconque des revendications 1 à 3,
**caractérisée en ce que**
l'évidement (34) est réalisé sous forme d'au moins un évidement annulaire (34), notamment périphérique, qui est disposé à distance radiale de la périphérie externe (46) et à distance radiale de la périphérie interne (36).

10. Assemblage de transmission d'effort (10), notamment un embrayage à lamelles (10) ou un frein à friction,
**caractérisé en ce que**
l'assemblage de transmission d'effort (10) présente au moins une lamelle (22, 28, 30) selon l'une quelconque des revendications précédentes.

11. Assemblage de transmission d'effort selon la revendication 10,
**caractérisé en ce**
**qu'**au moins une, de préférence toutes les lamelles (22, 28, 30), dans lesquelles a lieu l'introduction de forces, est/sont réalisée(s) selon l'une quelconque des revendications 1 à 9.
